# EUROPEAN PATENT APPLICATION

(11) **EP 3 822 321 A1**
(43) Date of publication of application: **19.05.2021**
(21) Application number: 19833977.2
(22) Date of filing: 21.05.2019
(51) Int. Cl.: C09B 67/20, C09B 48/00, C09D 11/033, C09D 11/037, C09D 11/102

(54) **QUINACRIDONE PIGMENT COMPOSITION, AND INK COMPOSITION HAVING SAME**

(30) Priority: 12.07.2018 JP 2018132372
(71) Applicant: DIC Corporation, Tokyo 174-8520 (JP)
(72) Inventor: HIGUCHI Yukiko, Kamisu-shi, Ibaraki 314-0193 (JP); OOTAKE Hidehiro, Kamisu-shi, Ibaraki 314-0193 (JP)
(74) Representative: TBK
(86) International application number: PCT/JP2019/020036
(87) International publication number: WO 2020/012782

(57) **Abstract**

A medium is selective, both initial viscosity and temporal viscosity are high particularly as an NC flexographic ink depending on a system of a printing ink or paint, and an effect has not been sufficient. Provided are a quinacridone pigment composition which is suitable for printing inks, paints, and the like and which is excellent in fluidity (initial viscosity, temporal viscosity) and an ink composition containing the same. It has been found that pigment more improved in fluidity (initial viscosity, temporal viscosity) than conventional techniques is obtained by using a specific quinacridone pigment composition for quinacridone pigments, leading to the completion of the present invention.

## Description

### Technical Field

The present invention relates to a quinacridone pigment composition capable of being used in various applications such as printing inks, paints, colored molding products, and textile printing.

### Background Art

In general, pigment intended for coloring is composed of fine primary particles. The fine primary particles are very likely to aggregate. In a case where the pigment is used as, for example, a printing ink for gravure printing, flexographic printing, or the like or as paint, the pigment needs to be dispersed in a medium. In this case, a lot of energy and time are spent in disaggregating aggregated particles or attempts to add various dispersants are made for the purpose of stably maintaining the state of fine particles dispersed in a medium.

Especially, quinacridone pigments typified by C. I. Pigment Red 122 are those used in various situations. However, the quinacridone pigments have a serious problem with fluidity (initial viscosity and temporal stability) when being used in various applications as coloring agents, because fine primary particles of the pigments tend to aggregate tightly. In particular, the following problem or trouble occurs: a problem that a printing ink or paint containing fine pigment particles dispersed therein has an increased viscosity and therefore cannot be stirred or transferred in a step subsequent to dispersion or a trouble that, after a produced printing ink or paint is stored, dispersed fine particles of pigment re-aggregate to increase the viscosity of the printing ink or the like with time or the printing ink gels and therefore cannot be used in some cases.

Therefore, a technique using a pigment derivative has been investigated for the purpose of enhancing the fluidity (initial viscosity and temporal stability). For example, Patent Literature 1 describes a pigment composition containing at least one selected from a pigment derivative containing a basic group, an anthraquinone derivative containing a basic group, or a triazine derivative containing a basic group; a resin containing a sulfo group; and pigment as a technique for providing a pigment composition and pigment dispersion which are suitable for offset inks, gravure inks, paints, ink-jet inks, and the like and which are excellent in non-aggregation properties and fluidity. However, in a method described in Patent Literature 1, a medium is selective, both initial viscosity and temporal viscosity are high particularly as an NC flexographic ink depending on a system of a printing ink or paint, and an effect is not sufficient.

### Citation List

### Patent Literature

PTL 1: Japanese Unexamined Patent Application Publication No. 2002-201377

### Summary of Invention

### Technical Problem

The present invention provides a quinacridone pigment composition which is suitable for printing inks, paints, and the like and which is excellent in fluidity (initial viscosity, temporal viscosity) and an ink composition containing the same.

### Solution to Problem

The inventors have performed intensive investigations to solve the above-mentioned problems and, as a result, have found that pigment more improved in fluidity (initial viscosity, temporal viscosity) than conventional techniques is obtained by using a specific quinacridone pigment composition for quinacridone pigments, leading to the completion of the present invention.

That is, the present invention relates to
"Item 1.
   A quinacridone pigment composition containing
   a quinacridone pigment and
   a pigment derivative represented by Formula (I): 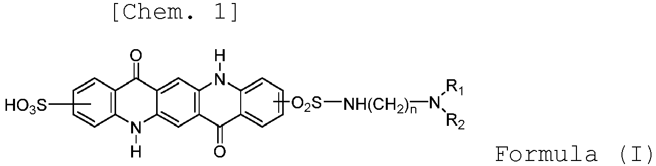
   [in the formula, R¹ and R² independently represent a hydrogen atom or a C1-C5 alkyl group and n is an integer of 1 to 5].
Item 2.
   Furthermore, 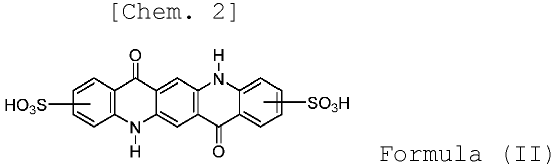
   the quinacridone pigment composition specified in Item 1, containing a pigment derivative represented by Formula (II).
Item 3.
   The quinacridone pigment composition specified in Item 1, wherein 0.05 parts by mass to 10.0 parts by mass of the pigment derivative represented by Formula (I) is contained per 100 parts by mass of the quinacridone pigment.
Item 4.
   The quinacridone pigment composition specified in Item 2, wherein 0.05 parts by mass to 10.0 parts by mass of the pigment derivative represented by Formula (I) and 0.05 parts by mass to 10.0 parts by mass of the pigment derivative represented by Formula (II) are contained per 100 parts by mass of the quinacridone pigment and the sum of the amount of the pigment derivative represented by Formula (I) and the amount of the pigment derivative represented by Formula (II) is 0.1 parts by mass to 10.0 parts by mass.
Item 5.
   A pigment for gravure printing and/or flexographic printing, containing the quinacridone pigment composition specified in any one of Items 1 to 4.
Item 6.
   An ink composition containing at least the quinacridone pigment composition specified in any one of Items 1 to 4, a nitrocellulose resin, and an alcohol solvent.
Item 7.
   The ink composition specified in Item 6, wherein the alcohol solvent is ethanol and/or 1-ethoxy-2-propanol". Advantageous Effect of Invention

According to the present invention, a quinacridone pigment composition excellent in fluidity (initial viscosity, temporal viscosity) can be provided. Description of Embodiments

The present invention described below in detail.

The present invention is a quinacridone pigment composition containing a quinacridone pigment and a pigment derivative represented by Formula (I):

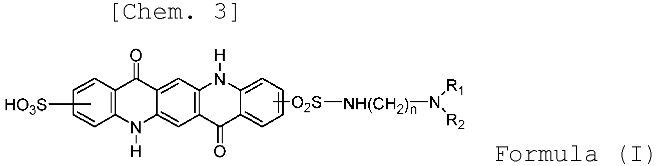

[in the formula, R¹ and R² independently represent a hydrogen atom or a C1-C5 alkyl group and n is an integer of 1 to 5].

The quinacridone pigment composition contains the quinacridone pigment,
the pigment derivative represented by Formula (I), and

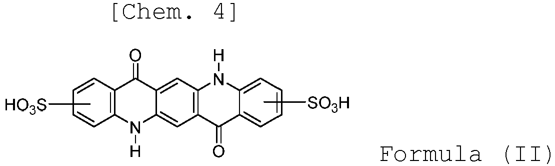

a pigment derivative represented by Formula (II).

The quinacridone pigment composition according to the present invention exhibits excellent fluidity when being used as a printing ink or paint. Furthermore, the quinacridone pigment composition according to the present invention exhibits excellent fluidity in alcohol and glycol NC flexographic inks increasingly demanded from the market in recent years.

In the present invention, the term "fluidity" refers to the initial viscosity and temporal viscosity of prepared ink.

### <Description of Quinacridone Pigment>

Examples of the quinacridone pigment, which is used in the present invention, include C. I. Pigment Red 122, C. I. Pigment Violet 19, C. I. Pigment Red 202, C. I. Pigment Red 207, C. I. Pigment Red 209, and the like. In particular, C. I. Pigment Red 122 is industrially important. C. I. Pigment Red 122 may be a commercially available product or may be produced by a known common method. The known common method is, for example, a method in which a raw material, such as 2,5-dianilinoterephthalic acid (a raw material for C. I. Pigment Violet 19) or 2,5-di-toluidinoterephthalic acid (a raw material for C. I. Pigment Red 122), for a crude quinacridone pigment is cyclodehydrated in polyphosphoric acid, is put into water, and is then precipitated or the like. Heating the crude quinacridone pigment in a liquid medium enables the size of particles to be controlled, thereby enabling the quinacridone pigment to be obtained.

The quinacridone pigment, which is used in the present invention, may be one appropriately subjected to a known treatment after production.

### <Description of Pigment Derivatives>

Pigment derivatives used in the present invention are described below in detail.

### 1. Description of Pigment Derivative Represented by Formula (I)

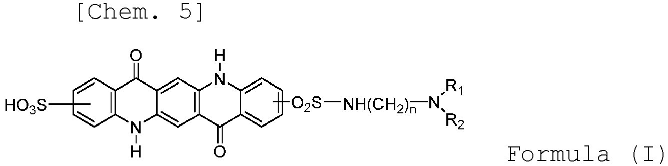

In the formula, R¹ and R² independently represent a hydrogen atom or a C1-C5 alkyl group and n is an integer of 1 to 5.

The "C1-C5 alkyl group" is a methyl group, an ethyl group, a propyl group, a butyl group, a pentyl group, or the like.

In particular, in order to enhance the fluidity, it is preferable that an alkylsulfamoyl chain has moderate rigidity, the steric hindrance effect of preventing the approach of pigment particles, and an interaction with resin in a medium; n is 2 to 4; and R¹ and R² are a methyl group or an ethyl group.

### 2. Description of Pigment Derivative Represented by Formula (II)

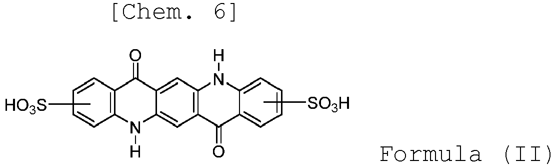

On this occasion, the substitution positions of sulfo groups are α- and β-positions. In every case, a similar effect is exhibited. The substitution positions of the sulfo groups are not particularly limited.

The present invention has been found, by trial and error, that the above effect of the present invention is obtained in such a manner that the pigment derivative which is represented by Formula (I) and in which a group represented by (SO₃H) and a group represented by (SO₂NH (CH₂)ₙR¹R²) (n, R¹, and R² are as described above) are bonded to a quinacridone pigment residue is used for the quinacridone pigment among countless conceivable derivatives. Furthermore, the inventors have found that the co-presence of both the pigment derivative represented by Formula (I) and the pigment derivative which is represented by Formula (II) and in which two groups represented by (SO₃H) are bonded to a quinacridone pigment residue with the quinacridone derivative enables pigment in which particularly excellent fluidity has been attained as compared to conventional one to be obtained.

The addition of a quinacridone derivative containing a group represented by (SO₃H) or an amino group is known as a method for improving the dispersibility of the quinacridone pigment composition. A relatively large amount of a derivative is necessary to sufficiently disperse pigment. As a result, the fluidity decreases conversely. Therefore, it has been very difficult to achieve both dispersibility and fluidity. The applicants have performed intensive investigations under such circumstances. As a result, the applicants have been able to simply reduce the additive amount of a derivative by half using a quinacridone derivative containing one group represented by (SO₃H) and one group represented by (SO₂NH(CH₂)ₙR¹R²) with respect to one quinacridone skeleton and also have been able to significantly reduce the additive amount of the derivative by allowing two different functional groups to act on both pigment and resin, thereby achieving both dispersibility and fluidity. Furthermore, the applicants have been able to develop particularly excellent performance using a derivative containing two groups represented by (SO₃H) .

In general, fine particles of pigment dispersed in a vehicle are energetically instable. The particles cause flocculation and attempt to become energetically stable in the vehicle. Therefore, it is conceivable that a reduction in fluidity occurs when ink or the like is stored. In order to prevent the reduction in fluidity of ink or the like, the affinity balance between resin/solvent/pigment needs to be optimized such that a dispersion state is stably maintained. Only a group represented by (SO₃H) is insufficient to optimize the affinity balance. However, the pigment derivative represented by Formula (I) is excellent in the steric hindrance effect of preventing the approach of pigment particles and an interaction with resin in a medium. As a result, excellent dispersion stabilization can be probably attained. The pigment derivative represented by Formula (II) promotes the interaction between the pigment derivative represented by Formula (I) and the quinacridone pigment and more effectively exhibits the steric hindrance effect of preventing the approach of pigment particles and the interaction with resin in a medium. As a result, more excellent dispersion stabilization can be probably attained.

### 3. Description of Pigment Derivatives Represented by Formulas (III), (IV), and (V)

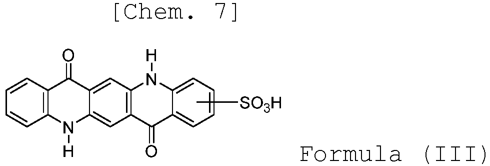

On this occasion, the substitution positions of sulfo groups are α- and β-positions. In every case, a similar effect is exhibited. The substitution positions of the sulfo groups are not particularly limited.

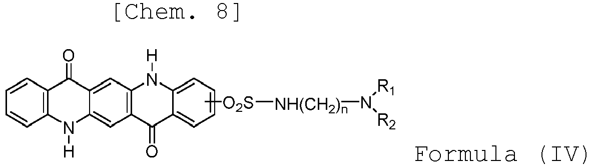

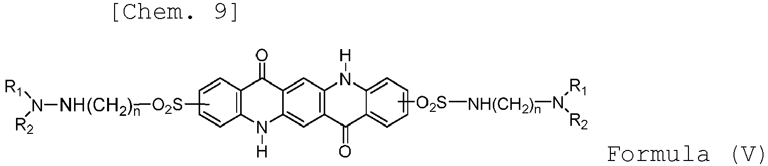

In Formulas (IV) and (V), R¹ and R² independently represent a hydrogen atom or a C1-C5 alkyl group and n is an integer of 1 to 5. The "C1-C5 alkyl group" is a methyl group, an ethyl group, a propyl group, a butyl group, a pentyl group, or the like. In particular, in order to enhance the fluidity, it is preferable that an alkylsulfamoyl chain has moderate rigidity, the steric hindrance effect of preventing the approach of pigment particles, and an interaction with resin in a medium; n is 2 to 4; and R¹ and R² are a methyl group or an ethyl group.

In the quinacridone pigment composition according to the present invention, pigment derivatives represented by Formulas (III), (IV), and (V) may be present together in addition to the pigment derivatives represented by Formulas (I) and (II). The pigment derivatives represented by Formulas (III), (IV), and (V) are those which contain substituents of the pigment derivatives represented by Formulas (I) and (II) and which have a similar structure and probably function subsidiarily in order to exhibit the steric hindrance effect of preventing the approach of pigment particles and an interaction with resin in a medium as exhibited by the pigment derivatives represented by Formulas (I) and (II).

### <Description of Blending Amount>

Per 100 parts by mass of the quinacridone pigment, 0.05 parts by mass to 10.0 parts by mass of the pigment derivative represented by Formula (I) may be contained. When the pigment derivative represented by Formula (I) and the pigment derivative represented by Formula (II) are used in combination, 0.05 parts by mass to 10.0 parts by mass of the pigment derivative represented by Formula (I) and 0.05 parts by mass to 10.0 parts by mass of the pigment derivative represented by Formula (II) may be contained per 100 parts by mass of the quinacridone pigment (provided that the sum of the amount of the pigment derivative represented by Formula (I) and the amount of the pigment derivative represented by Formula (II) is 0.1 parts by mass to 10.0 parts by mass). Using such a blending amount probably increases the effect of reducing the viscosity of ink.

Herein, when the pigment derivative represented by Formula (I) and the pigment derivative represented by Formula (II) are used in combination, the mixing ratio therebetween is preferably 50:50 to 95:5, more preferably 70:30 to 90:10, and most preferably 75:25 to 85:15 on a mass basis.

### <Method for Producing Pigment Derivative>

Hereinafter, a method for producing each pigment derivative is described. The pigment derivative according to the present invention can be produced by a known common method. An example which is described herein should not be construed as limitative. The pigment derivative represented by Formula (I) can be produced in such a manner that C. I. Pigment Violet 19 is chlorosulfonated, followed by a reaction with a dialkylaminoalkylamine. Chlorosulfonation can be carried out by a method in which thionyl chloride is mixed with chlorosulfonic acid and C. I. Pigment Violet 19 is dissolved in the mixture, followed by heating, or by heating C. I. Pigment Violet 19 sulfonic acid in phosphorus oxychloride. The former is preferable.
The pigment derivative represented by Formula (II) can be obtained in such a manner that C. I. Pigment Violet 19 is chlorosulfonated by the above-mentioned method, followed by hydrolysis with water. Alternatively, the pigment derivative represented by Formula (II) can be obtained in such a manner that C. I. Pigment Violet 19 is dissolved in concentrated sulfuric acid, followed by heating.
Only the pigment derivative represented by Formula (II) or a mixture of the pigment derivative represented by Formula (I) and the pigment derivative represented by Formula (II) can be obtained by controlling the reaction temperature, the reaction time, raw materials used in each reaction, and/or the like in the above reaction steps. The mixing ratio between the pigment derivative represented by Formula (I) and the pigment derivative represented by Formula (II) can be adjusted to a desired value by appropriately controlling the reaction temperature, the reaction time, raw materials used in each reaction, and/or the like and is preferably 50:50 to 95:5, more preferably 70:30 to 90:10, and most preferably 75:25 to 85:15 on a mass basis.

The obtained pigment derivatives are analyzed by liquid chromatography mass spectroscopy (LC/MS) or field desorption mass spectrometry (FD/MS), thereby enabling the presence thereof to be confirmed.

### <Method for Producing Pigment Composition>

An example of a method for producing the pigment composition according to the present invention is described below. It should not be construed that the present invention is limited to the example.

Wet cake of a quinacridone pigment commercially available or produced by a known common method is added to water or an organic solvent, followed by stirring, whereby quinacridone pigment slurry is prepared. The pigment derivative represented by Formula (I) or the mixture of the pigment derivative represented by Formula (I) and the pigment derivative represented by Formula (II) is added to the quinacridone pigment slurry in the form of dry powder or wet cake or in a pigment derivative slurry state dissolved in water/organic solvent, followed by stirring. This is appropriately filtered, dried, and crushed, whereby the pigment composition according to the present invention is obtained.

Alternatively, the pigment composition according to the present invention can be prepared by mixing a dry powder of the pigment derivative and a dry powder of the quinacridone pigment together.

Incidentally, the pigment according to the present invention can be prepared so as to further contain an additive, a dispersant, or the like and so as to be suitable for various applications unless an effect of the present invention is undesirably affected.

The pigment according to the present invention may contain a plurality of quinacridone pigments as coloring components or may contain an organic pigment in addition to the phenyl quinacridone pigment.

The organic pigment, which may be contained, can be selected from known organic pigments depending on various applications.

The obtained pigment according to the present invention can be successfully used in any applications needing a coloring function. The pigment can be used in, for example, known common various applications such as paints, printing inks, colored molding products, toner for electrostatic image development, color filters for liquid crystal displays, and aqueous inks for ink jet recording.

The quinacridone pigment composition according to the present invention can provide a printing ink excellent in initial viscosity and storage stability. The printing ink can be prepared in such a manner that the quinacridone pigment composition according to the present invention is mixed with known common various binder resins, various solvents, various additives, and/or the like by a conventional preparation method. In particular, a liquid ink can be prepared in such a manner that a base ink, having high pigment concentration, for liquid inks is prepared and various binders, various solvents, various additives, and/or the like are used.

The quinacridone pigment composition according to the present invention can be used to produce PU inks and NC inks excellent in initial viscosity and storage stability and is suitable as an organic pigment for gravure printing inks and flexographic printing inks. A PU ink is composed of a PU resin, pigment, a solvent, and various additives. An NC ink is composed of an NC resin, pigment, a solvent, and various additives. The PU resin is not particularly limited, may have a urethane structure in its skeleton, and includes polyurethane, polyurethanepolyurea, and the like. Examples of the solvents include aromatic organic solvents such as toluene and xylene; ketone solvents such as methyl ethyl ketone, methyl isobutyl ketone, cyclohexanone, 2-heptanone, and 3-heptanone; easter solvents such as ethyl acetate, n-propyl acetate, isopropyl acetate, and isobutyl acetate; alcohol solvents such as methanol, ethanol, n-propanol, isopropanol, n-butanol, isobutanol, and t-butanol; glycol ether solvents such as ethylene glycol monomethyl ether, ethylene glycol monoethyl ether, ethylene glycol mono-n-propyl ether, ethylene glycol mono-i-propyl ether, ethylene glycol mono-n-butyl ether, ethylene glycol mono-i-butyl ether, ethylene glycol mono-t-butyl ether, propylene glycol monomethyl ether, propylene glycol monoethyl ether, propylene glycol mono-n-propyl ether, propylene glycol mono-i-propyl ether, propylene glycol mono-n-butyl ether, propylene glycol mono-i-butyl ether, propylene glycol mono-t-butyl ether, ethylene glycol dimethyl ether, ethylene glycol diethyl ether, ethylene glycol di-n-propyl ether, ethylene glycol di-i-propyl ether, ethylene glycol di-n-butyl ether, ethylene glycol di-i-butyl ether, ethylene glycol di-t-butyl ether, propylene glycol dimethyl ether, propylene glycol diethyl ether, propylene glycol di-n-propyl ether, propylene glycol di-i-propyl ether, propylene glycol di-n-butyl ether, propylene glycol di-i-butyl ether, propylene glycol di-t-butyl ether, diethylene glycol monomethyl ether, diethylene glycol monoethyl ether, diethylene glycol mono-n-propyl ether, diethylene glycol mono-i-propyl ether, diethylene glycol mono-n-butyl ether, diethylene glycol mono-i-butyl ether, diethylene glycol mono-t-butyl ether, diethylene glycol dimethyl ether, diethylene glycol diethyl ether, diethylene glycol di-n-propyl ether, diethylene glycol di-i-propyl ether, diethylene glycol di-n-butyl ether, diethylene glycol di-i-butyl ether, diethylene glycol di-t-butyl ether, dipropylene glycol monomethyl ether, dipropylene glycol monoethyl ether, dipropylene glycol mono-n-propyl ether, dipropylene glycol mono-i-propyl ether, dipropylene glycol mono-n-butyl ether, dipropylene glycol mono-i-butyl ether, dipropylene glycol mono-t-butyl ether, dipropylene glycol dimethyl ether, dipropylene glycol diethyl ether, dipropylene glycol di-n-propyl ether, dipropylene glycol di-i-propyl ether, dipropylene glycol di-n-butyl ether, dipropylene glycol di-i-butyl ether, dipropylene glycol di-t-butyl ether, ethylene glycol monomethyl ether acetate, ethylene glycol monoethyl ether acetate, propylene glycol monoethyl ether acetate, propylene glycol monomethyl ether acetate, diethylene glycol monomethyl ether acetate, and diethylene glycol monoethyl ether acetate; and the like.

The pigment composition according to the present invention exhibits excellent fluidity to ink composed of any solvent and is described below in detail for the purpose of thickly describing applicability to alcohols increasingly demanded from the market in recent years.

The solvents may be used alone or in combination. As the various additives, the followings can be used: anionic, nonionic, cationic, and amphoteric surfactants; rosins such as gum rosin, polymerized rosin, disproportionated rosin, hydrogenated rosin, maleinized rosin, cured rosin, and phthalic alkyd resins; pigment derivatives; dispersants; humectants; adhesion aids; leveling agents; defoamers; antistatic agents; trapping agents; blocking inhibitors; wax components; and the like.

The pigment according to the present invention exhibits excellent fluidity to ink composed of any resin and is useful in nitrocellulose. Nitrocellulose is also called pyroxylin and is resin obtained by nitrating hydroxy groups of cellulose with a mixture of nitric acid and sulfuric acid. The solubility of nitrocellulose in a solvent varies depending on the degree of nitration. Nitrocellulose with a high degree of nitration is used for hydrocarbon solvents and ester solvents and nitrocellulose with a low degree of nitration is used for alcohol solvents. Nitrocellulose has a high glass transition temperature and hardly causes blocking during the winding of a print. Furthermore, nitrocellulose gravure inks have good printing suitability. Therefore, nitrocellulose is widely used as a binder resin for printing inks.

In a case where the pigment according to the present invention is used as a printing ink, a printing ink containing the pigment, prepared as described above, according to the present invention can be used in such a manner that the printing ink is diluted with ethyl acetate, a polyurethane varnish, or a polyamide varnish. The printing ink can be prepared by a known common method.

In a case where paint is prepared using the pigment according to the present invention as a coloring agent, resin used as paint includes an acrylic resin, a melamine resin, an epoxy resin, a polyester resin, a polyurethane resin, a polyamide resin, a phenol resin, and the like.

Examples of a solvent for use in paint include aromatic solvents, acetate solvents, propionate solvents, alcohol solvents, ether solvents, ketone solvents, aliphatic hydrocarbon solvents, nitrogen compound solvents, lactone solvents, carbamates such as a 48:52 mixture of methyl carbamate and ethyl carbamate, water, and the like. In particular, the solvent is suitably a water-soluble polar solvent such as a propionate solvent, an alcohol solvent, an ether solvent, a ketone solvent, a nitrogen compound solvent, a lactone solvent, or water.

In a case where a resin composition for paints is prepared in such a manner that the pigment composition is dispersed in or mixed with a liquid resin, usual additives, for example, dispersants, fillers, paint aids, drying agents, plasticizers, and/or auxiliary pigments can be used. This is attained in such a manner that components are used alone or in combination or all the components are collected, are added at once, are dispersed, or are mixed.

Examples of a disperser for dispersing a composition containing pigment prepared depending on applications as described above include, but are not limited to, known dispersers such as disper, homo mixers, paint conditioners, skandex, bead mills, attritors, ball mills, two-roll mills, three-roll mills, and press kneaders. The pigment is dispersed in such a manner that resin or a solvent is added such that viscosity enabling dispersion with these dispersers is obtained. A high-concentration paint base after dispersion has a solid content of 5% to 20%. The paint base and resin or a solvent are mixed into paint, which is provided for use.

The present invention is further described below in detail using examples and comparative examples. In the examples and comparative examples below, "%" denotes "mass percent" unless otherwise specified.

### <Method for Synthesizing Pigment Derivative>

### (Synthesis Example 1)

Into a 500 ml round-bottom separable flask, 130 g of chlorosulfuric acid (a purity of 99.0%) and 20 g of thionyl chloride (a purity of 95.0%) were charged. The surroundings of the flask were cooled in an ice-water bath under stirring, whereby the liquid temperature was adjusted to 5 °C or lower. Into the flask, 20 g of a powder pigment of C. I. Pigment Violet 19 was charged for 30 minutes. The powder pigment was completely dissolved by stirring for 30 minutes with the flask maintained at 10 °C or lower. Thereafter, the flask was heated to 45 °C over 15 minutes. After Violet 19 was chlorosulfonated by stirring for two hours, the surroundings of the flask were cooled to 5 °C or lower in the ice-water bath and a reaction mixture was taken into 3,000 g of iced water. Chlorosulfonated quinacridone slurry crystallized in water was filtered using Nutsche, followed by washing with 300 g of iced water, whereby wet cake of chlorosulfonated quinacridone was obtained. The obtained wet cake was re-slurried in 180 g of iced water and the slurry was cooled in the ice-water bath and was stirred at 10 °C or lower for ten minutes, followed by adjusting the pH of the slurry to 5 to 6 with sodium carbonate. To the slurry, 15 g of N-N dimethylaminopropylamine was added dropwise over 15 minutes using a dropping funnel, followed by stirring for 30 minutes. After the slurry was heated to 80 °C and was stirred for one hour, the slurry was filtered using Nutsche, followed by washing with 500 g of water, whereby wet cake of N-N dimethylaminopropylsulfamoylquinacridone was obtained.

A quinacridone pigment derivative containing 26.5% mono(dimethylaminopropylaminosulfamoyl)quinacridone monosulfonate and 5.7% quinacridone disulfonate was obtained as analyzed by LC/MS.

### (Synthesis Example 2)

Into a 500 ml round-bottom separable flask, 130 g of chlorosulfuric acid (a purity of 99.0%) and 20 g of thionyl chloride (a purity of 95.0%) were charged. The surroundings of the flask were cooled in an ice-water bath under stirring, whereby the liquid temperature was adjusted to 5 °C or lower. Into the flask, 20 g of a powder pigment of C. I. Pigment Violet 19 was charged in small amounts for 30 minutes. The powder pigment was completely dissolved by stirring for 30 minutes with the flask maintained at 10 °C or lower. Thereafter, the flask was heated to 45 °C over 15 minutes. After Violet 19 was chlorosulfonated by stirring for two hours, the surroundings of the flask were cooled to 5 °C or lower in the ice-water bath and a reaction mixture was taken into 3,000 g of iced water. Chlorosulfonated quinacridone slurry crystallized in water was filtered using Nutsche, followed by washing with 300 g of iced water, whereby wet cake of chlorosulfonated quinacridone was obtained. The obtained wet cake was re-slurried in 90 g of iced water and the slurry was cooled in the ice-water bath and was stirred at 10 °C or lower for ten minutes, followed by adjusting the pH of the slurry to 5 to 6 with sodium carbonate. To the slurry, 15 g of N-N dimethylaminopropylamine was added dropwise over 15 minutes using a dropping funnel, followed by stirring for 30 minutes. After the slurry was heated to 80 °C and was stirred for one hour, the slurry was filtered using Nutsche, followed by washing with 500 g of water, whereby wet cake of N-N dimethylaminopropylsulfamoylquinacridone was obtained. A quinacridone pigment derivative containing 50.1% mono(dimethylaminopropylaminosulfamoyl)quinacridone monosulfonate and 12.7% quinacridone disulfonate was obtained as analyzed by LC/MS.

### (Synthesis Example 3)

Into a 500 ml round-bottom separable flask, 130 g of chlorosulfuric acid (a purity of 99.0%) and 20 g of thionyl chloride (a purity of 95.0%) were charged. The surroundings of the flask were cooled in an ice-water bath under stirring, whereby the liquid temperature was adjusted to 5 °C or lower. Into the flask, 20 g of a powder pigment of C. I. Pigment Violet 19 was charged in small amounts for 30 minutes. The powder pigment was completely dissolved by stirring for 30 minutes with the flask maintained at 10 °C or lower. Thereafter, the flask was heated to 45 °C over 15 minutes. After Violet 19 was chlorosulfonated by stirring for two hours, the surroundings of the flask were cooled to 5 °C or lower in the ice-water bath and a reaction mixture was taken into 3,000 g of iced water. Chlorosulfonated quinacridone slurry crystallized in water was filtered using Nutsche, followed by washing with 300 g of iced water, whereby wet cake of chlorosulfonated quinacridone was obtained.

A quinacridone pigment derivative containing 68.6% quinacridone disulfonate and 24.6% quinacridone monosulfonate was obtained as analyzed by LC/MS.

### <Analysis Conditions for Pigment Derivative>

In a glass bottle, 2 mg of a sample and 50 mL of NMP were weighed, followed by dispersing for 30 minutes using an ultrasonic disperser. The dispersion was filtered using a 0.2 µm disk for liquid chromatography. Obtained filtrate was analyzed by LC/MS.

### Measurement Conditions

### Instrument name Agilent LC/MS 6130

### LC

Column: UPLCBEH Shield RP18 (ϕ 2.1 mm × 150 mm 1.8 µm)
Mobile phase: ammonium hydrogen carbonate/methanol/THF
Gradient: 94/5/1 → eight minutes → 1/98/1 → two minutes → 1/1/98 (eight minutes)
Flow: 0.3 mL/min
Column temperature: 50 °C
Injection amount: 1 µL
Measurement wavelength: 294 ± 4 nm, 504 ± 4 nm

### MS

Ionization mode: ESI (AJS-ES)
Scan: m/z 100 to 1,000
Nebulizer gas: N₂ (8 L/min, 200 °C)
Drying gas: N₂ (12 L/min, 350 °C)
Nebulizer pressure: 30 psig

### [Example 1]

Into a pressurizable reaction vessel equipped with a stirrer, 195.3 g (a pigment amount of 50 g) of wet cake of C. I. Pigment Red 122 (produced by DIC Corporation), 600 g of water, and 0.83 g of the quinacridone derivative of Synthesis Example 1 were charged, followed by stirring at 100 °C for one hour at a stirring rotational speed of 200 rpm. After heating, slurry was cooled to room temperature and was then filtered using Nutsche. Filter cake was washed with 3,000 g of water. Obtained pigment cake was dried at 98 °C for 18 hours and was then crushed, whereby 50.7 g of a quinacridone pigment composition was obtained. The obtained quinacridone pigment composition was analyzed, whereby quinacridone disulfonate and mono(dimethylaminopropylaminosulfamoyl)quinacridone monosulfonate were detected.

### [Example 2]

Into a pressurizable reaction vessel equipped with a stirrer, 195.3 g (a pigment amount of 50 g) of wet cake of C. I. Pigment Red 122 (produced by DIC Corporation), 600 g of water, and 2.5 g of the quinacridone derivative of Synthesis Example 1 were charged, followed by stirring at 100 °C for one hour at a stirring rotational speed of 200 rpm. After heating, slurry was cooled to room temperature and was then filtered using Nutsche. Filter cake was washed with 3,000 g of water. Obtained pigment cake was dried at 98 °C for 18 hours and was then crushed, whereby 52.3 g of a quinacridone pigment composition was obtained. The obtained quinacridone pigment composition was analyzed, whereby quinacridone disulfonate and mono(dimethylaminopropylaminosulfamoyl)quinacridone monosulfonate were detected.

### [Example 3]

Into a pressurizable reaction vessel equipped with a stirrer, 195.3 g (a pigment amount of 50 g) of wet cake of C. I. Pigment Red 122 (produced by DIC Corporation), 600 g of water, and 0.9 g of the quinacridone derivative of Synthesis Example 2 were charged, followed by stirring at 100 °C for one hour at a stirring rotational speed of 200 rpm. After heating, slurry was cooled to room temperature and was then filtered using Nutsche. Filter cake was washed with 3,000 g of water. Obtained pigment cake was dried at 98 °C for 18 hours and was then crushed, whereby 50.7 g of a quinacridone pigment composition was obtained. The obtained quinacridone pigment composition was analyzed, whereby quinacridone disulfonate and mono(dimethylaminopropylaminosulfamoyl)quinacridone monosulfonate were detected.

### [Example 4]

Into a pressurizable reaction vessel equipped with a stirrer, 195.3 g (a pigment amount of 50 g) of wet cake of C. I. Pigment Red 122 (produced by DIC Corporation), 600 g of water, and 2.68 g of the quinacridone derivative of Synthesis Example 2 were charged, followed by stirring at 100 °C for one hour at a stirring rotational speed of 200 rpm. After heating, slurry was cooled to room temperature and was then filtered using Nutsche. Filter cake was washed with 3,000 g of water. Obtained pigment cake was dried at 98 °C for 18 hours and was then crushed, whereby 52.3 g of a quinacridone pigment composition was obtained. The obtained quinacridone pigment composition was analyzed, whereby quinacridone disulfonate and mono(dimethylaminopropylaminosulfamoyl)quinacridone monosulfonate were detected.

### [Comparative Example 1]

Into a pressurizable reaction vessel equipped with a stirrer, 195.3 g (a pigment amount of 50 g) of wet cake of C. I. Pigment Red 122 (produced by DIC Corporation) and 600 g of water were charged, followed by stirring at 100 °C for one hour at a stirring rotational speed of 200 rpm. After heating, slurry was cooled to room temperature and was then filtered using Nutsche. Filter cake was washed with 3,000 g of water. Obtained pigment cake was dried at 98 °C for 18 hours and was then crushed, whereby 50.0 g of a quinacridone pigment composition was obtained.

### [Comparative Example 2]

Into a pressurizable reaction vessel equipped with a stirrer, 195.3 g (a pigment amount of 50 g) of wet cake of C. I. Pigment Red 122 (produced by DIC Corporation), 600 g of water, and 1.07 g of the quinacridone derivative (a mixture of the disulfonate and the monosulfonate) of Synthesis Example 3 were charged, followed by stirring at 100 °C for one hour at a stirring rotational speed of 200 rpm. After heating, slurry was cooled to room temperature and was then filtered using Nutsche. Filter cake was washed with 3,000 g of water. Obtained pigment cake was dried at 98 °C for 18 hours and was then crushed, whereby 51.0 g of a quinacridone pigment composition was obtained. The obtained quinacridone pigment composition was analyzed, whereby quinacridone disulfonate and quinacridone monosulfonate were detected.

### [Comparative Example 3]

Into a pressurizable reaction vessel equipped with a stirrer, 195.3 g (a pigment amount of 50 g) of wet cake of C. I. Pigment Red 122 (produced by DIC Corporation), 600 g of water, and 2.34 g of a quinacridone derivative (a mixture of a disulfonate and a monosulfonate) were charged, followed by stirring at 100 °C for one hour at a stirring rotational speed of 200 rpm. After heating, slurry was cooled to room temperature and was then filtered using Nutsche. Filter cake was washed with 3,000 g of water. Obtained pigment cake was dried at 98 °C for 18 hours and was then crushed, whereby 52.1 g of a quinacridone pigment composition was obtained. The obtained quinacridone pigment composition was analyzed, whereby quinacridone disulfonate and quinacridone monosulfonate were detected.

### <Analysis of Pigment Derivative in Pigment>

Into a 200 ml glass beaker, 100 g of ethanol, 10 g of the above sample, and 0.15 g of 48% sodium hydroxide were charged, followed by stirring for two hours to three hours and then filtration using Nutsche. Filter cake (pigment) and filtrate (ethanol + sodium hydroxide) were analyzed for composition by an analysis method below.

### <Analysis of Filter Cake (Pigment)>

In a glass bottle, 0.1 g of the above sample and 10 ml of methanol were weighed, followed by dispersing for 30 minutes using an ultrasonic disperser. The dispersion was filtered using a 0.2 µm disk for liquid chromatography. An obtained sample was analyzed by LC/MS.

### <Analysis of Filtrate>

In a glass bottle, 2 ml of the above filtrate and 3 ml of NMP were mixed. The mixture was filtered using a 0.2 µm disk for liquid chromatography. An obtained sample was analyzed by LC/MS.

### Measurement Conditions

### Instrument name Agilent LC/MS 6130

### LC

Column: EclipsePlus C18RRHDUPLCBEH Shield RP18 (ϕ 2.1 mm × 100 mm 1.8 µm)
Mobile phase A/B: 10 mM AcONH₄/methanol
Gradient: methanol 20% → 15 minutes → 80% (holding for ten minutes)
Flow: 0.5 mL/min
Column temperature: 50 °C
Injection amount: 1 µL
Measurement wavelength: 294 ± 4 nm, 504 ± 4 nm

### MS

Ionization mode: ESI (AJS-ES)
Scan: m/z 100 to 1,500
Nebulizer gas: N₂ (8 L/min, 200 °C)
Drying gas flow rate: N₂ (12 L/min, 350 °C)
Nebulizer pressure: 30 psig

### [Preparation Example 1]

### (Preparation of NC Ethanol Varnish)

Into a 1 L plastic bottle, 154.9 parts of a nitrocellulose resin (a nitrogen content of 10.7 to 12.2, a non-volatile matter content of 70%, volatile matter ethanol), 270 parts of ethanol (produced by Wako Pure Chemical Industries, Ltd.), and 8.34 parts of ethyl acetate (produced by Wako Pure Chemical Industries, Ltd.) were put, followed by dispersing using a paint shaker (manufactured by Toyo Seiki Seisaku-sho, Ltd.) for two hours, whereby an NC ethanol varnish was obtained.

### [Preparation Example 2]

Into a 200 mL glass bottle, 20.0 parts of each of the quinacridone pigment compositions obtained in Examples 1 to 4 and Comparative Examples 1, 2, and 3, 40.0 parts of an NC ethanol varnish, 40.0 parts of ethanol (produced by Wako Pure Chemical Industries, Ltd.), and 150 parts of zirconia YTZ balls 1.50 mmϕ (manufactured by Tokyo Garasu Kikai Co., Ltd.) were put,

followed by dispersing using Shaker Skandex SK550 (manufactured by Fast & Fluid Management B. V. Company) for two hours, whereby Ink Compositions 1 to 7 were obtained.

### [Measurement Results of Initial Viscosity of Quinacridone Ink Compositions]

The obtained quinacridone ink compositions were left stationary for one hour or more in a 20 °C thermostatic chamber and were measured for viscosity using a B-type viscometer, BROOKFIELD DV3TRVTJ0. Evaluation results were as shown in Table 1. Lower viscosity is excellent.

**[Table 1]**

| | Initial viscosity (mPa·sec) | |
|---|---|---|
| Viscometer rotational speed (rpm) | 20 rpm | 250 rpm |
| Ink Composition 1 (Example 1) | 980 | 520 |
| Ink Composition 2 (Example 2) | 880 | 470 |
| Ink Composition 3 (Example 3) | 860 | 450 |
| Ink Composition 4 (Example 4) | 560 | 320 |
| Ink Composition 5 (Comparative Example 1) | 6260 | 1100 |
| Ink Composition 6 (Comparative Example 2) | 4700 | 860 |
| Ink Composition 7 (Comparative Example 3) | 3800 | 750 |

### [Measurement Results of Viscosity of Quinacridone Ink Compositions After Storage Stability Test]

After being left stationary at room temperature for 24 hours, the obtained purple ink compositions were left stationary for one hour or more in a 20 °C thermostatic chamber and were measured for viscosity using a RB85-type viscometer, R85L, (manufactured by Toki Sangyo Co., Ltd.). Evaluation results were as shown in Table 2. Lower viscosity is excellent.

**[Table 2]**

| | Viscosity after storage stability test (mPa·sec) | |
|---|---|---|
| Viscometer rotational speed (rpm) | 20 rpm | 250 rpm |
| Ink Composition 1 (Example 1) | 1800 | 700 |
| Ink Composition 2 (Example 2) | 1760 | 750 |
| Ink Composition 3 (Example 3) | 1680 | 700 |
| Ink Composition 4 (Example 4) | 920 | 450 |
| Ink Composition 5 (Comparative Example 1) | 6220 | 1130 |
| Ink Composition 6 (Comparative Example 2) | 6220 | 1140 |
| Ink Composition 7 (Comparative Example 3) | 5000 | 960 |

From comparisons between Examples 1 to 4 and Comparative Examples 1 to 3, it is clear that quinacridone pigment compositions containing a quinacridone derivative containing mono(dimethylaminopropylaminosulfamoyl)quinacridone monosulfonate exhibit excellent fluidity (initial viscosity, temporal viscosity). This is probably because a quinacridone skeleton portion in mono(dimethylaminopropylaminosulfamoyl)quinacridone monosulfonate acts on the surface of a quinacridone pigment and a sulfo group and a dimethylaminopropylaminosulfamoyl group act on resin (NC varnish) and a solvent (ethanol), so that the affinity balance between resin/solvent/pigment is optimized and a dispersion state is stably maintained.

Pigment compositions shown in Examples 1 to 4 further contain quinacridone disulfonate in the quinacridone derivative and exhibit particularly excellent fluidity.

## Claims

1. A quinacridone pigment composition containing:
a quinacridone pigment; and
a pigment derivative represented by Formula (I): 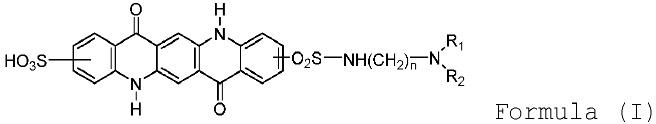 [where, R¹ and R² independently represent a hydrogen atom or a C1-C5 alkyl group and n is an integer of 1 to 5].

2. The quinacridone pigment composition according to Claim 1, further containing a pigment derivative represented by Formula (II):

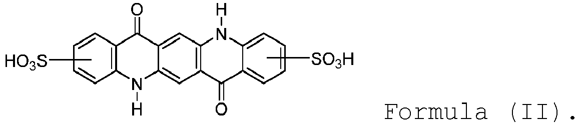

3. The quinacridone pigment composition according to Claim 1, wherein 0.05 parts by mass to 10.0 parts by mass of the pigment derivative represented by Formula (I) is contained per 100 parts by mass of the quinacridone pigment.

4. The quinacridone pigment composition according to Claim 2, wherein 0.05 parts by mass to 10.0 parts by mass of the pigment derivative represented by Formula (I) and 0.05 parts by mass to 10.0 parts by mass of the pigment derivative represented by Formula (II) are contained per 100 parts by mass of the quinacridone pigment and the sum of the amount of the pigment derivative represented by Formula (I) and the amount of the pigment derivative represented by Formula (II) is 0.1 parts by mass to 10.0 parts by mass.

5. A pigment composition for gravure printing and/or flexographic printing, containing the quinacridone pigment according to any one of Claims 1 to 4.

6. An ink composition containing at least the quinacridone pigment composition according to any one of Claims 1 to 4, a nitrocellulose resin, and an alcohol solvent.

7. The ink composition according to Claim 6, wherein the alcohol solvent according to Claim 6 is ethanol and/or 1-ethoxy-2-propanol.
